# EUROPEAN PATENT SPECIFICATION

(11) **EP 4 003 011 B1**
(45) Date of publication and mention of the grant of the patent: **25.03.2026**
(21) Application number: 20842681.7
(22) Date of filing: 24.07.2020
(51) Int. Cl.: A01N 25/04, A01N 25/30, A01N 43/653, A01P 3/00

(54) **FUNGICIDE COMPOSITION**
FUNGIZIDZUSAMMENSETZUNG
COMPOSITION FONGICIDE

(30) Priority: 24.07.2019 AU 2019902615
(43) Date of publication of application: 01.06.2022
(73) Proprietor: Elders Toll Formulation Pty Ltd, Adelaide, South Australia, 5000 (AU)
(72) Inventor: FLYNN, Anthony, Altona, Victoria 3018 (AU); MERCHANT, Purav, Altona, Victoria 3018 (AU); PENTLAND, Philip, Altona, Victoria 3018 (AU)
(74) Representative: Müller, Christian Stefan Gerd
(86) International application number: PCT/AU2020/050757
(87) International publication number: WO 2021/012012

(56) References cited:
- WO-A1-02/19821
- WO-A1-2014/130653
- AU-A4- 2016 101 508
- AU-A4- 2016 101 508
- US-A- 6 096 769
- US-A1- 2004 014 800
- US-A1- 2007 053 944
- US-A1- 2009 143 447
- US-A1- 2010 048 655
- US-A1- 2010 179 198
- US-A1- 2011 218 108
- BASF: "Safety data sheet OPUS 125 Fungicide", 17 January 2017 (2017-01-17), XP093057171, Retrieved from the Internet <URL:https://web.archive.org/web/20180317094504/https://crop-solutions.basf.com.au/files/WP1LMJDFljr7mYQI.pdf> [retrieved on 20230623]
- WANG XU, LI LIANWEI, HE WEIDONG, WU CHI: "Formation of Hyperbranched Amphiphilic Terpolymers and Unimolecular Micelles in One-Pot Copolymerization", MACROMOLECULES, AMERICAN CHEMICAL SOCIETY, WASHINGTON DC UNITED STATES, vol. 48, no. 19, 13 October 2015 (2015-10-13), Washington DC United States, pages 7327 - 7334, XP055784541, ISSN: 0024-9297, DOI: 10.1021/acs.macromol.5b01637

## Description

### Field

This invention relates to aqueous suspension concentrate formulations of the fungicide epoxiconazole. In particular, the invention relates to highly loaded suspension concentrate formulations that comprise epoxiconazole.

### Background

Epoxiconazole has the IUPAC designation (2RS,3SR)-1-[3-(2-chlorophenyl)-2,3-epoxy-2-(4-fluorophenyl)propyl]-1H-1,2,4-triazole). It is a triazole fungicide that inhibits the metabolism of fungi that infest crop plants.

Suspension concentrate (SC) formulations of epoxiconazole have been provided on a commercial basis by Bayer, CropSmart, Adama and BASF - these formulations have contained a loading of about 125g/L of epoxiconazole active agent.

This loading of 125 g/L epoxiconazole in a SC formulation is significantly less than the loading of other commercially available triazole fungicides. For example, the fungicide flutriafole is widely commercially available as a suspension concentrate comprising about 500g/L of active agent.

Australian patent 2016101508 describes a highly loaded SC flutriafole formulation (example 1). Flutriafole is a triazole fungicide quite similar to epoxiconazole. WO 02/19821 discloses an aqueous pesticide suspension that comprises a pesticide such as epoxiconazole, a non-ionic ethoxylate surfactant, a naphthalene sulfonate-formaldehyde condensate, a non-ionic polymethyl methacrylate-polyethylene oxide graft copolymer and water.

The inventors of the instant invention have used the parameters of the formulation of example 1 in AU 201610158 and have replaced flutriafole with epoxiconazole in the formulation. The resultant formulation was not viable, based on the fact that the SC mill-base had an undesirably high viscosity. This shows that flutriafole prior art (and presumably prior art related to other triazole active agents) cannot be used in a straightforward way to prepare analogous epoxiconazole formulations.

Different SC formulation stability behaviour between different triazole active agents can be explained in part by recognising the importance of Ostwald ripening as a formulation failure mechanism.

Ostwald ripening (or Ostwald maturation) involves the growth of larger crystalline moieties at the expense of smaller crystalline moieties in a suspension concentrate. This leads to the formation of larger suspended particles (or larger suspended particle aggregates caused by bridging crystallisation), and the SC formulation may fail because of the settling-out of active agent moieties in a spray tank or in storage, and/or because the blocking of spray nozzle orifices.

In some pesticides the adverse effects of Ostwald ripening may be ameliorated by using formulation adjuvants that act as crystal habit modifiers (and impede the formation of long crystals). The ability to provide crystal habit modification of an active agent and the required nature of the crystal habit modifier for a particular active may be critically dependent on fine details of crystal morphology and crystal growth kinetics, and these events are notoriously difficult to predict from active agent structure.

It is also desirable to provide such epoxiconazole compositions that do not rely on organic/aromatic solvent components and allow these components, which may provide a health risk, to be minimised or omitted.

### Summary of Invention

Accordingly, in a first aspect, the present invention provides an aqueous suspension-concentrate (SC) composition comprising
at least 400g/L, preferably at least 450 g/L, of epoxiconazole;
comb-graft copolymer surfactant having a poly-(meth)acrylate backbone and pendant polyoxyethylene moieties attached to the backbone;
a surfactant which is an ethoxylated and propoxylated fatty alcohol; and
a surfactant which is an ethoxylated and propoxylated butanol.

The aqueous suspension-concentrate may optionally further comprise one or more additional surfactants.

Another surfactant which may optionally be present in addition to the ethoxylated and propoxylated butanol is a surfactant comprising a fatty alkyl chain and polyethoxylate group. Examples of such surfactants may be selected from the group consisting of fatty alcohol ethoxylates, fatty acid ethoxylates, fatty amine ethoxylates and fatty amide ethoxylates.

In a second aspect, the present invention provides a method of protecting plants or the site of plants from fungi comprising spray application of the suspension-concentrate composition of the first aspect to the plants or the site of plants optionally following dilution of the suspension-concentrate.

### Detailed Description

In this specification, "(meth)acrylate" is a general term for acrylic acid and methacrylic acid and their esters such as methyl esters and may be either one or more of them.

The terms tank mix and tank mixing refer to the mix formed and method involved in mixing of components such as adjuvants, particularly surfactants for use as wetters, in the tank at the time of preparing a diluted mixture of the epoxiconazole suspension concentrate composition for spray application.

In this specification the word "comprise" and variations of the word, such as "comprising" and "comprises" is not intended to exclude other additives, components, integers or steps.

Without wishing to be bound by theory, it is believed that the surfactant component including the comb-graft copolymer surfactant and ethoxylated and propoxylated fatty alcohol provide an effective crystal habit modifier for the epoxiconazole that inhibits crystal growth of the larger epoxiconazole particles and so inhibits Ostwald ripening. The efficacy of the surfactant component, which may include one or more surfactants, is greater than the efficacy of other surfactants and unexpectedly the combination of surfactants allows a much higher loading of the epoxiconazole than is otherwise achieved due at least in part to the superior inhibition of composition destabilisation by Ostwald ripening.

The aqueous suspension-concentrate (SC) composition of the first aspect comprises
at least 400g/L, preferably at least 450 g/L, of epoxiconazole;
surfactant selected from the group consisting of comb-graft copolymer having a poly(meth)acrylate backbone and pendant polyoxyethylene moieties attached to the backbone;
surfactant which is an ethoxylated and propoxylated fatty alcohol;
a surfactant which is an ethoxylated and propoxylated butanol; and
optionally a surfactant having a fatty alkyl chain and polyethoxylate group.

The invention relates to suspension-concentrates of epoxiconazole which has the IUPAC chemical name (2*RS*,3*SR*)-1-[3-(2-chlorophenyl)-2,3-epoxy-2-(4-fluorophenyl)propyl]-1*H*-1,2,4-triazole.

The amount of the epoxiconazole is at least 400 g/L, preferably at least 450 g/L, such as at least 480g/L or at least 500 g/L. Typically, the loading of epoxiconazole is no more than 650 g/L, such as no more than 600 g/L or no more than 550 g/L.

The suspension-concentrate comprises a comb-graft copolymer having a poly-(meth)acrylate backbone and pendant polyoxyethylene moieties attached to the backbone. In one embodiment the comb-graft copolymer is a polyoxyethylene/(meth)acrylic acid copolymer.

One example of such copolymer is the Atlox^{®} 4913 which contains approximately one third of the polymethyl methacrylate-polyethylene oxide graft copolymer, one third water and one third propylene glycol. In one embodiment the graft copolymer contains about 36.6% methyl methacrylate, 1.9% methacrylic acid, both grafted with methoxypoly(ethylene glycol) 750 methacrylate (61.5%). A further example is Tersperse^{®} 2500 which comprises about 35 wt% of the relevant comb-graft copolymer.

The comb-graft copolymer is typically present in the suspension-concentrate composition in an amount of at least 3 g/L, such as at least 5 g/L or at least 10 g/L. The comb-graft copolymer is typically present in an amount of no more than 50 g/L such as no more than 45 g/L. Accordingly in some embodiments the comb-graft copolymer is present in an amount of 3 g/L to 50 g/L, 5 g/L to 40 g/L or 5 g/L to 30 g/L. In one embodiment, the amount of comb-graft copolymer surfactant in the suspension-concentrate is 3 g/L to 32 g/L (corresponding to 10-90 g/L of a 35% solution of the surfactant in a carrier solution). The concentration of comb-graft copolymer surfactant in the suspension-concentrate may be 7g/L to 14 g/L (corresponding to 20g/L to 40 g/L of a 35% solution of the surfactant in a carrier solution). In another embodiment, the concentration of comb-graft copolymer surfactant in the suspension-concentrate is about 10 g/L (corresponding to 30 g/L of a 35% solution of the surfactant in a carrier solution).

The suspension-concentrate composition comprises an ethoxylated and propoxylated fatty alcohol. The fatty alcohols are ethoxylated as well as propoxylated. Thus the ethoxylated and propoxylated fatty alcohol contain a polymer containing ethyleneoxy (EO) and propyleneoxy (PO) monomer units and a fatty alcohol forming an ether with the EO-PO copolymer. The fatty alcohol portion of the surfactant is typically a fatty aliphatic alcohol which may be straight or branched chain aliphatic group. The aliphatic group, typically alky, generally contains 10 to 24 carbon atoms, preferably from 12 to 20 carbon atoms, particularly 14 to 18 carbon atoms such as 16 to 18 carbon atoms. Such surfactants may be of formula I.

R-(ethylene oxide)x-(propylene oxide)y -OH (I)

where R is typically fatty aliphatic of from 10 to 24 carbon atoms, preferably from 12 to 20 carbon atoms, particularly 14 to 18 carbon atoms such as 16 to 18 and x and y represent the number of ethylene oxide and propylene oxide derived monomer units respectively.

Examples of suitable ethoxylated and propoxylated fatty alcohol include Antarox^{®} 65A9P which is believed to be an ethoxylated and propoxylated cetyl (C16) alcohol available as 100% liquid.

The amount of ethoxylated and propoxylated fatty alcohol may be at least 1 g/L such as at least 2 g/L or at least 3 g/L. The amount of ethoxylated and propoxylated fatty alcohol is typically no more than 50 g/L such as no more than 30 g/L or no more than 20 g/L.

In one embodiment the amount of ethoxylated and propoxylated fatty alcohol in the suspension-concentrate is in the range 1g/L to 20 g/L, preferably in the range 2g/L to10 g/L, more preferably in the range 3g/L to 6 g/L.

The ratio of ethylene oxide to propylene oxide derived units in the ethoxylated and propoxylated fatty alcohol will, together with the chain length of the fatty group, control the water miscibility and hydrophilic-lipophilic balance of the surfactant. The ratio of EO to PO moieties in the ethoxylated and propoxylated fatty alcohol may be in the range 2:50 to 50:2, preferably in the range 10:50 to 50:10, more preferably in the range 20:50 to 50:20.

The suspension-concentrate comprises a surfactant component comprising both comb graft copolymer surfactant and ethoxylated and propoxylated fatty alcohol surfactant. In one embodiment the ratio of comb-graft copolymer surfactant (net of carrier solvent) to ethoxylated and propoxylated fatty alcohol surfactant in the suspension-concentrate is in the range 30:1 to 0.8:1, preferably in the range 10:1 to 1:1, more preferably in the range 5:1 to 5:3.

The suspension-concentrate composition comprises an ethoxylated and propoxylated lower alkanol, wherein the lower alkanol is butyl alcohol (C₄). The ethoxylated and propoxylated lower alkanol may have formula I where R is butyl.

The amount of the ethoxylated and propoxylated lower alkanol surfactant may be up to 90 g/L such as 2 g/K to 80 g/L or 10 g/L to 70 g/L. In one embodiment the amount of ethoxylated and propoxylated lower alkanol surfactant in the suspension-concentrate is in the range 20g/L to 90 g/L, preferably in the range 40g/L to 70 g/L, more preferably in the range 45g/L to 60 g/L, even more preferably about 50 g/L.

An example of a commercially useful surfactant composition is the product Tersperse^{®} 4894 which comprises a blend of 80 wt% ethoxylated and propoxylated lower alkanol and about 20 wt% ethoxylated fatty alcohol based on the weight of the surfactant components. Thus the product contributes to both of the optional surfactant types.

In one set of embodiments the ratio of EO to PO moieties in the ethoxylated and propoxylated lower alkanol surfactant is in the range 2:50 to 50:2, preferably in the range 10:50 to 50:10, more preferably in the range 10:50 to 50:10 and still more preferably in the range 20:50 to 50:20.

Specific examples of ethoxylated and propoxylated lower alkanol include polyoxyethylene (17) polyoxypropylene (17) monobutyl ether, polyoxyethylene (27) polyoxypropylene (24) monobutyl ether, polyoxyethylene (3) polyoxypropylene (2) monobutyl ether, polyoxyethylene (35) polyoxypropylene (28) monobutyl ether, polyoxyethylene (36) polyoxypropylene (36) monobutyl ether, polyoxyethylene (45) polyoxypropylene (33) monobutyl ether, polyoxyethylene (5) polyoxypropylene (3) monobutyl ether, polyoxypropylene (17) polyoxyethylene (17) monobutyl ether, polyoxypropylene (2) polyoxyethylene (3) monobutyl ether, polyoxypropylene (24) polyoxyethylene (27) monobutyl ether, polyoxypropylene (28) polyoxyethylene (35) monobutyl ether, polyoxypropylene (3) polyoxyethylene (5) monobutyl ether, polyoxypropylene (33) polyoxyethylene (45) monobutyl ether and polyoxypropylene (36) polyoxyethylene (36) monobutyl ether.

Another surfactant which may optionally be present in addition is surfactant comprising a fatty alkyl chain and ethoxylate group. Examples of such surfactants may be selected from the group consisting of fatty alcohol ethoxylates, fatty acid ethoxylates, fatty amine ethoxylates and fatty amide alkoxylates. A range of such surfactants will be known to those skilled in the art and are readily available from commercial sources. One such group of surfactants are of formula II.

R(OC₂H₄)ₙOH (II)

where R is the alkyl group and n is the number of ethoxylate units.

The amount of these additional surfactants having a fatty alkyl chain and polyethoxylate group may be up to 100 g/L but is typically no more than 65 g/L such as 2 g/L to 100 g/L or 5 g/L to 65 g/L, such as 10 g/L to 65 g/L, of suspension-concentrate composition. In one set of embodiments the suspension-concentrate contains an amount of surfactant having a fatty alkyl chain and polyethoxylate group in the range of 8 g/L to 30g/L, preferably in the range 10 g/L to 13 g/L.

The surfactant having a fatty alkyl chain and polyethoxylate group typically comprises a fatty alkyl (such as R in the formula R(OC₂H₄)ₙOH ) which is a C₁₀-C₂₀ fatty alkyl moiety, preferably a C₁₂-C₁₈ alkyl moiety, more preferably a C₁₂-C₁₆ alkyl moiety.

The number of (ethyleneoxy) EO groups (OC₂H₄) in the surfactant having a fatty alkyl chain and ethoxylate group may, for example, be in the range 1-50, preferably in the range 4-30, such as in the range 6-20, or in the range 7-14.

In one set of embodiments, the ratio of ethoxylated and propoxylated lower alkanol to surfactant having a fatty alkyl chain and polyethoxylate group is in the range 15:1 to 1:1, preferably in the range 10:1 to 10:4, more preferably about 10:2.

In one embodiment, the combined weight of ethoxylated and propoxylated lower alkanol plus fatty-alcohol ethoxylate in the composition is in the range 20 g/L 100 g/L, preferably in the range 50g/L to 70 g/L, more preferably about 65 g/L.

The composition of the invention may comprise an anti-freeze agent such as glycerol and the concentration of anti-freeze agent in the suspension-concentrate is typically up to 150 g/L such as in the range 30g/L to 150 g/L, preferably in the range 60-100 g/L, more preferably about 80 g/L.

In one embodiment the composition of the invention comprises an agent to modify the rheology of the composition, such as an additive chosen from the group consisting of polymeric thickeners and clays. Examples of clay thickener include smectite clay may, for example, be present in an amount of 2 g/L to 15 g/l, preferably in the range 3 g/L to 10 g/L, such as about 5 g/L of the suspension-concentrate.

The rheology modifying agent may be a carbohydrate polymer, preferably a polysaccharide gum, such as xanthan gum, and may be present in an amount of 0.3 g/L to 2 g/L, preferably 0.6 g/L to 1 g/L such as about 0.8g/L. The xanthan gum may be derived from arrange of sources such as derived from *Xanthomonas campestris.*

Also disclosed is the use of a composition as defined herein for protecting plants or the loci thereof against fungi.

The present invention further provides a method of protecting plants or the site of plants from fungi, comprising spray application of the suspension-concentrate composition of the first aspect to the plants or the site of plants optionally following dilution of the suspension concentrate. It is particularly preferred that the diluted composition is tank mixed with a spray tank adjuvant that provides spreading, absorption, penetration and/or retention of the active agent. These are known in the art from commercial sources and an example of a suitable tank mix is a liquid alcohol alkoxylate non-ionic surfactant available under the trade name WETSPRAY, a liquid alcohol alkoxylate surfactant provided at a concentration of 1000g/L by ADAMA, Australia.

Examples of control of fungi may for example be leaf rust, stripe rust, septoria nodorum blotch and powdery mildew of wheat, leaf rust, net form of net blotch, leaf scald and powdery mildew of barley and leaf spot and leaf speckle in bananas. The composition may also be used in seed treatment.

The composition is, for example, useful in protecting plants against leaf blotch (*Septoria tritici*) and rust (*Puccinia triticina*).

The invention will now be described with reference to the following examples. It is to be understood that the examples are provided by way of illustration of the invention and that they are in no way limiting to the scope of the invention.

### Examples

### Example 1: SC composition according to the invention: Epoxiconazole 500 g/L.

A composition of the invention containing 500g/L epoxiconazole SC (designated as COMPOSITION 1) was prepared by combining the components shown in Table 2 in accordance with the procedure of Example 2.

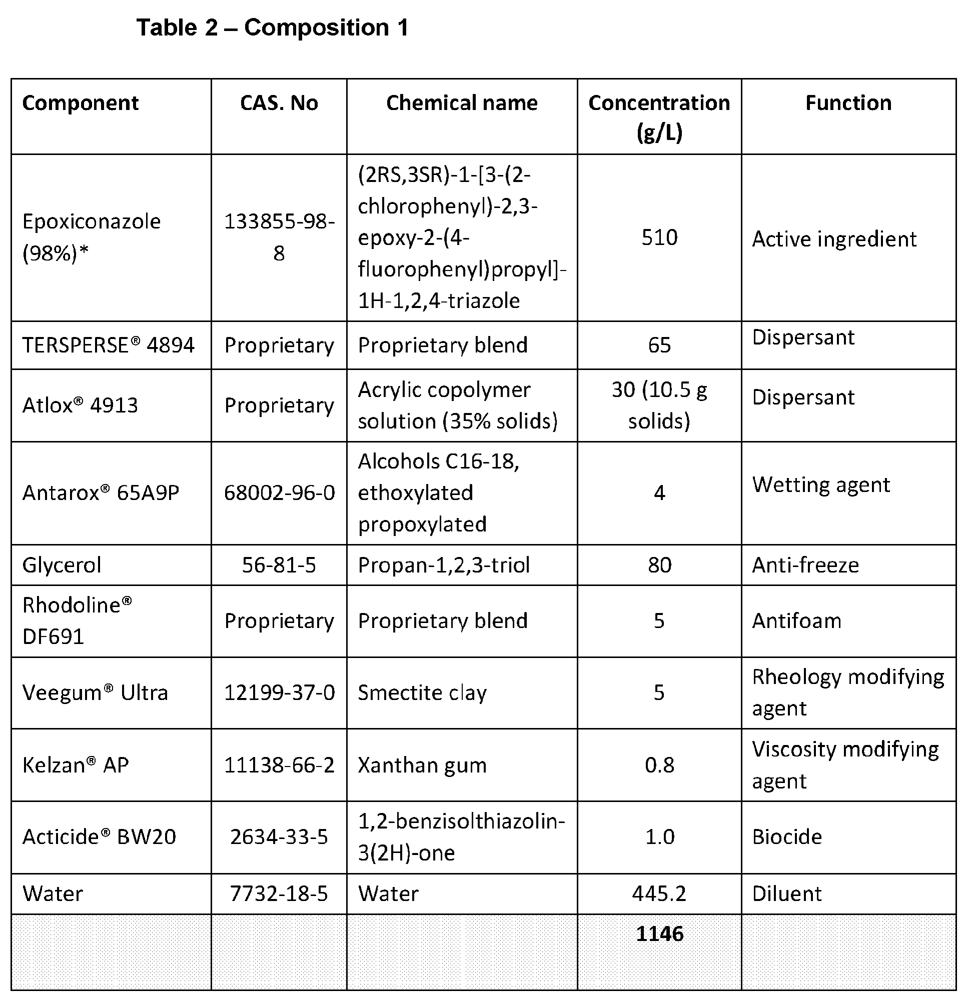

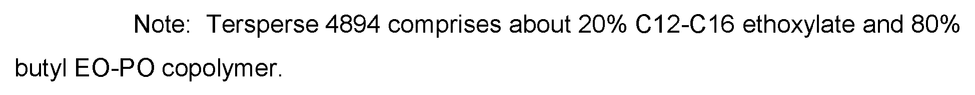

### Example 2

### Formulation method for COMPOSITION 1 Equipment

- Paddle mixer *(Dispermat^{®} N1)*
- Silverson^{®} high shear batch mixer
- 70L stainless steel vessel
- 1,000L stainless steel mixing vessel
- 1,200-1,500L stainless steel mixing vessel

### Composition process

A typical manufacturing batch size would be 1,000L.
**Step 1.** To prepare the mill base blend (which will later be fed to the mill) fill a 1,000L stainless steel mixing vessel with approximately 80% of the water required. Mix with the Silverson^{®} high shear batch mixer to form a vortex and gradually add Veegum^{®} Ultra, Rhodoline^{®} DF691, TERSPERSE^{®} 4894, Atlox^{®} 4913, Antarox^{®} 65A9P, Acticide^{®} BW20 and 50% of required glycerol *(leaving a sufficient amount for the dispersion of* Kelzan^{®} *AP).* Mix until homogeneous or for another 15 minutes, whichever is longer.
**Step 2.** Gradually add epoxiconazole technical material to the 1,000L vessel whilst constantly mixing. Continue mixing until the technical is uniformly dispersed or for another 15 minutes, whichever is longer.
**Step 3.** Continue mixing slowly, to avoid settling of active ingredient whilst the liquid contents are passed through a suitable bead mill to produce a particle size of dV90<10µm *(in the pilot plant a Dyno-mill MULTI-LAB was used).* The milled intermediate is collected in a 1,200-1,500L stainless steel mixing vessel. The milled intermediate must be stirred after it exits the mill to avoid settling.
*Note 1*. The milled intermediate is de-aerated if required, as it is very difficult to remove air bubbles once the thickener is added in later steps. Deaeration can be achieved by letting it sit or with gentle stirring to encourage the air bubbles to come to the top. If necessary, the stirring can take place in a hot box and the stirring can take place under partial vacuum.
**Step 4.** Gradually add the remaining glycerol into the 70L stainless steel vessel. Add the Kelzan^{®} AP and disperse using a paddle mixer *(the Dispermat^{®} was used in the pilot plant).*
**Step 5.** Gradually add the Kelzan^{®} AP dispersion to the 1,200-1,500L vessel whilst mixing and continue mixing until homogeneous or for another 30 minutes, whichever is longer.
*Note 2.* Avoid aerating the product by fully submerging the mixer head in the bulk liquid.

### Example 3

### Product Testing

A number of tests are undertaken on the final product candidate (Table 3).

**Table 3. Tests to be undertaken on the final product**

| **Test method** | **Specification** |
|---|---|
| Appearance (colour, odour, physical state) | White to off-white liquid suspension |
| Specific gravity (g/mL) | 1.12 -1.17 |
| pH(1%) | 6.5 - 7.5 |
| Viscosity (cP) (LV spindle 2, 20RPM) | 300 - 600 |
| Particle size (µm) | D(v, 0.5) < 5 |
| | D(v, 0.9) < 10 |
| Active ingredient concentration (g/L) | 475 - 525 |

### Physical and Chemical Properties of the Product

**Table 4. Properties of product candidate COMPOSITION 1**

| **Test Method** | **Data** |
|---|---|
| Appearance (colour, odour, physical state) | Off-white liquid suspension |
| Specific gravity (g/mL) (CIPAC MT3) | 1.16 |
| pH (1%) (CIPAC MT75.3) | 7.15 |
| Viscosity (cP) (CIPAC MT192) (LV spindle 2, 20RPM) | 496.5 |
| Particle size distribution (µm) (CIPAC MT187) | D(v, 0.5): 2.07 |
| | D(v, 0.9): 6.04 |
| Suspensibility on dilution with water (%) (CIPAC MT184) | 95.1 |
| Spontaneity of dispersions (%) (CIPAC MT160) | 95.9 |
| Wet sieve test (%) (CIPAC MT185) | 0.03 |
| Pourability (%) (CIPAC MT148.1) | 2.1 |
| Persistent foam (mL) (CIPAC MT47.2) | 60 |
| Low temperature stability (CIPAC MT39.3) | Off-white liquid suspension |
| Packaging Stability *(HDPE)* | No changes to bottle, labels and closure. |
| Flash Point (CIPAC MT12.1) | n/a |
| Flammability | n/a |
| Explosive properties | n/a |
| Oxidising properties | n/a |
| Corrosive hazard | n/a |
| Dangerous goods classification | Provided by the client |

**Table 5. Storage Stability**

| **Test Method** | **CIPAC Method** | **Specification** | **1 week at 0°C** | **Ambient** | **2 weeks at 54°C** |
|---|---|---|---|---|---|
| Appearance | Visual | White to off-white liquid suspension | White liquid suspension | White liquid suspension | White liquid suspension |
| pH (1%) | MT75.3 | 6.5 - 7.5 | 7.00 | 7.15 | 6.76 |
| Viscosity (cP) (LV spindle 2, 20RPM) | MT192 | 300 - 600 | 478.5 | 496.5 | 352.5 |
| Particle size distribution (µm) | MT187 | D(v, 0.5) < 5 | D(v, 0.5): 2.07 | D(v, 0.5): 2.07 | D(v, 0.5): 2.14 |
| | | D(v, 0.9) < 10 | D(v, 0.9): 6.01 | D(v, 0.9): 6.04 | D(v, 0.9): 6.10 |
| Suspensibilit y on dilution with water (%) | MT184 | 60 - 105% | 96.0 | 95.1 | 95.0 |
| Spontaneity of dispersions (%) | MT160 | 60 - 105% | 95.5 | 95.9 | 96.8 |
| Wet sieve test (%) | MT185 | <2% retained on a 75µm sieve | 0.03 | 0.03 | 0.04 |
| Pourability (%) | MT148.1 | <5% residue | 2.6 | 2.1 | 1.8 |
| Persistent foam (mL) | MT47.2 | <60mL after one minute | 60 | 60 | 60 |
| Low temperature stability | MT39.3 | White to off-white liquid suspension | Off-white liquid suspension | n/a | n/a |
| Packaging stability *(HDPE)* | Observation of packaging stability | No changes to bottle, labels and closure | No changes to bottle, labels and closure | No changes to bottle, labels and closure | No changes to bottle, labels and closure |

### Example 4a: Bioefficacy (Virginia trial)

### 4a Summary

One small plot replicated field trial was conducted between September and December 2016 to evaluate COMPOSITION 1 for the control of Septoria in wheat. The trial was conducted near Virginia in the Northern Adelaide Plains region of South Australia, Australia. The commercially available OPUS composition (OPUS 125 provided by BASF) contained epoxiconazole active agent at 125g/L. By contrast the composition of the invention COMPOSITION 1 contained epoxiconazole active agent at 500 g/L).

The following treatments were evaluated:

**Table 6**

| No. | Product/ Formulation | Rate of Product mL/ha | Active Ingredient | Dosage A.I. g per ha | Application Timing |
|---|---|---|---|---|---|
| 1 | Untreated | - | - | - | - |
| 2 | OPUS | 250 | epoxiconazole | 31.3 | A |
| 3 | OPUS | 500 | epoxiconazole | 62.5 | A |
| | | | | | |
| 8 | COMPOSITION 1 | 63 | epoxiconazol e | 31.5 | A |
| 9 | COMPOSITION 1 | 125 | epoxiconaz ole | 62.5 | A |
| 10 | COMPOSITION 1 | 500 | epoxiconaz ole | 250 | A |
| 11 | COMPOSITION 1 WETSPRAY 1000 | 63 200 mL/100 L | epoxiconazole non-ionic surfactant | 31.5 200 g/100 L | A A |

Treatments were applied using a gas powered hand boom incorporating two Agrotop AM 110 01 nozzles per metre. At an application speed of 1.5 metres/second and a pressure of 300 kPa, treatments were applied in a total volume of 90 L/ha and a medium quality. The treatments were applied at BBCH 37-38.

The trial was established as a randomised complete block design with four replicates. Plot size was 10 metres x 2 metres.

The target pest species was Septoria (Mycosphaerella graminicola). The Septoria population was established prior to the first application with low to moderate levels of severity present.

Detailed assessments were conducted at 14, 21, 28 and 42 days after application A (DAA), and commercial harvest. These included incidence and severity of Septoria, green leaf retention (GLR), crop vigour, phytotoxicity and yield.

All treatments reduced the severity of Septoria initially compared to the untreated control.

COMPOSITION 1 applied alone reduced the severity of Septoria at 14 DAA, with only COMPOSITION 1 + WETSPRAY providing significant reduction in severity by the conclusion of the trial at 42 DAA.

WETSPRAY was a liquid alcohol alkoxylate surfactant provided at a concentration of 1000g/L by ADAMA, Australia.

COMPOSITION 1 reduced the severity of Septoria infection to an equivalent or better level compared to where OPUS was applied.

All treatments were found safe to use on wheat var. Mace.

### 4a: Site Details and Experimental Design

**Table 7**

| | |
|---|---|
| Location | Virginia, South Australia |
| Crop | Wheat |
| Variety | Mace |
| Sowing Rate | 80 kg/ha |
| Field Type | Commercial |
| Soil Type | Brown sandy loam, pH: 7.6 |
| Site History | Wheat 2012-2014 |
| Sowing Date | 28 May 2016 |
| Planting Details and | Direct drill with 25 cm row spacing |
| Design | Randomised complete block |
| Replicates | Four |
| Plot Size | 10 m x 2 m |
| Buffers | 0.5 m between plots |

| Crop Management/Maintenance | Dual Gold PSPE and standard commercial management |
|---|---|
| Temperature and Rainfall | Over the duration of the trial average daily minimum and maximum temperatures were recorded. September received above average rainfall with a total of 111.2 mm for the month. October also received above average rainfall with 54.6 mm. November was slightly drier, with below average rainfall of 20.6 mm. December was an extremely unusual month with above average rainfall of 90 mm. The minimum temperature over the duration of the trial was received on 23 September 2016 with 3.9°C. The maximum temperature over the duration of the trial was received on 17 November with 35.8°C. Full weather details, as recorded at station 023083 are presented in the appendices. |

**4a:**

**Table 8 - Target pathogen**

| Common Name | Causal Agent | Disease Level |
|---|---|---|
| Septoria | *Mycosphaerella graminicola* | Due to the favourable climatic conditions for Septoria at the trial site, the disease was already present prior to the first application with a low-moderate severity. As the trial progressed, seasonal conditions were favourable to the spread and development of the disease in the crop, with a moderate to high severity observed by the conclusion of the trial. |

### 4a: Application Schedule (see summary section 4a above).

**4a:**

**Table 9- Application timing and spray volume**

| Application Timing and Spray Volume | | | |
|---|---|---|---|
| A | BBCH 37-38 | Spray Volume | 90 L/ha |

**4a:**

**Table 10 - Treatment Method**

| | |
|---|---|
| Equipment | Gas powered hand boom |
| Method | Broadcast |
| Application Speed | 1.5 m/s |
| Nozzles | Four 110 01 Agrotop AM |
| Nozzle Spacing | 50 cm |
| Pressure | 300 kPa |
| Application Volume | 90 L/ha |
| Spray Quality | Medium |
| Boom Height From Target | 50 cm |
| Number of Applications, Interval Between Applications | One |
| Application Timing | BBCH 37-38 |

**4a:**

**Table 11 - Application Details**

| | |
|---|---|
| Date | 07-Sep-16 |
| Time of Day | 1200-1500 hours |
| Temperature | 24.1C |
| Relative Humidity | 48% |
| Cloud Cover | 10% |
| Wind (Speed and Direction) | 5-10 km/hr, NE |
| Crop Growth Stage (BBCH and Description) | BBCH 37-38. Septoria was present at a low to moderate severity. |
| Mixing Observations | Nil |
| Compatibility Observations | Nil |

**4a:**

**Table 12 - Evaluations**

| Date | Visit Timing | Activity Code | Application Timing (Stage / Description) | Evaluation Description * | Evaluation Timing (Stage / Description) |
|---|---|---|---|---|---|
| 07-Sep-16 | 1 | A1 | BBCH 37-38 | - | |
| 21-Sep-16 | 2 | EV1 | - | 1, 2, 3, 4 | 14DAA |
| 28-Sep-16 | 3 | EV2 | - | 1, 2, 3, 4 | 21DAA |
| 05-Oct-16 | 4 | EV3 | - | 1, 2, 3, 4 | 28DAA |
| 19-Oct-16 | 5 | EV4 | - | 1, 2, 3, 4, 5 | 42DAA |
| 09-Dec-16 | 6 | EV5 | - | 6 | NCH |

| | | | | | |
|---|---|---|---|---|---|
| * See Evaluation table below for description | | | | | |

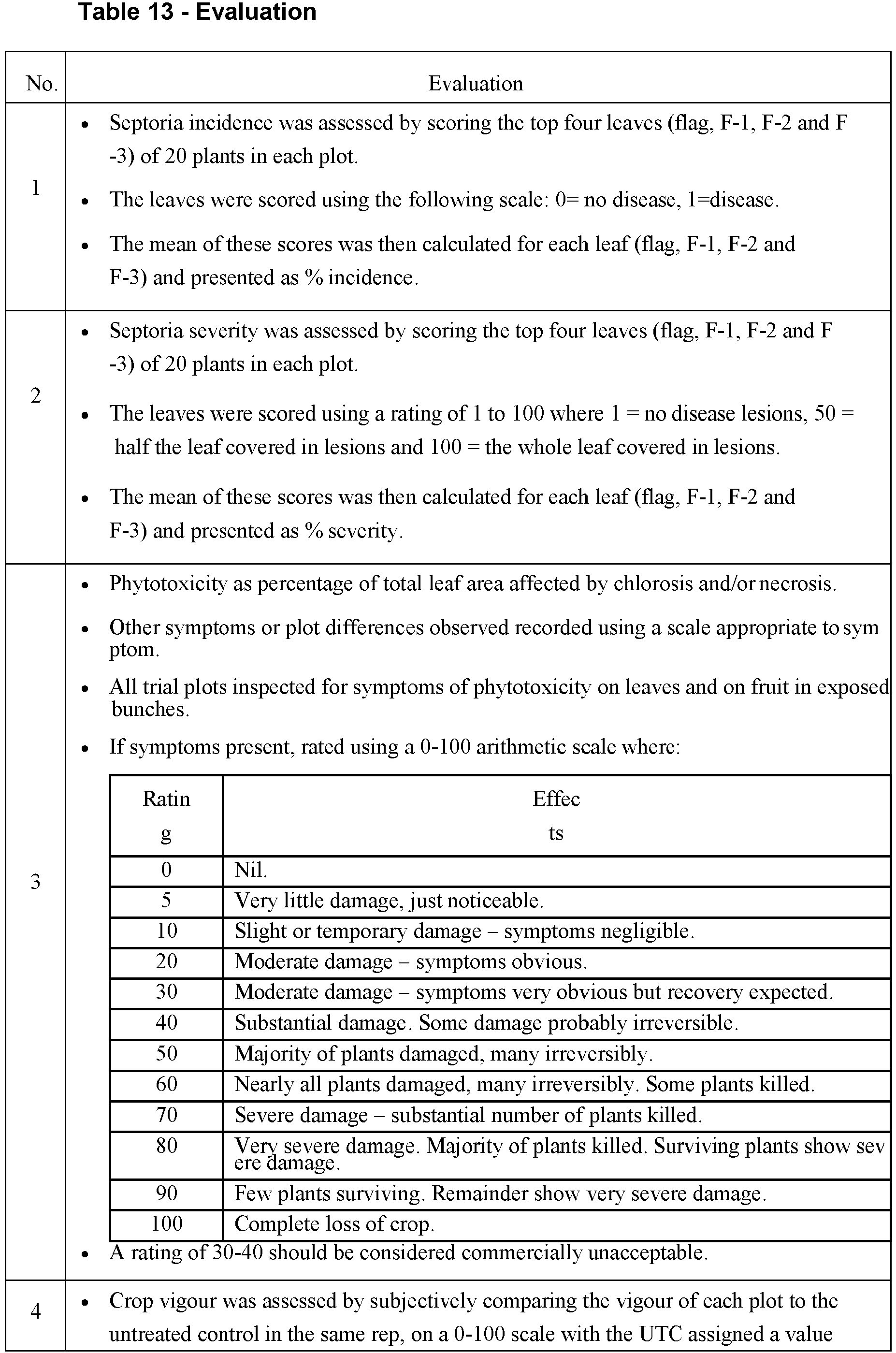

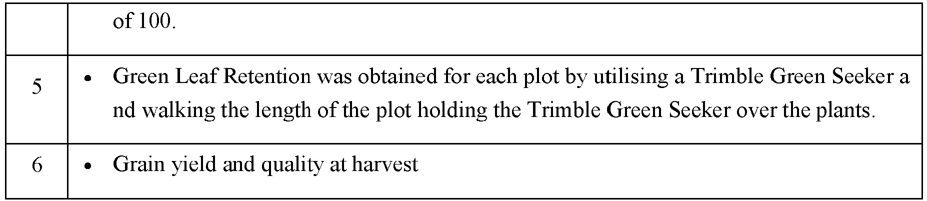

### 4a: RESULTS AND DISCUSSION - Epoxiconazole Trial Data 4a (Virginia)

**Table 14** shows the Mean Severity (% leaf damage) of Septoria per tr

| **no** | **treatment** | **Rate, ml/ha** | **ingredients** | **Dose, epoxicon per ha** | **14 DAA** | **42 DAA** |
|---|---|---|---|---|---|---|
| 1 | untreated | - | - | - | 58 d | 99 d |
| 2 | OPUS | 250 | epoxicon | 31.3 | 28 bc | 95 bcd |
| 3 | OPUS | 500 | epoxicon | 62.5 | 39 c | 97 cd |
| | | | | | | |
| 8 | Composition 1 | 63 | epoxicon | 31.5 | 9.4 ab | 93 bcd |
| 9 | Composition 1 | 125 | epoxicon | 62.5 | 25 abc | 93 bcd |
| 10 | Composition 1 | 500 | epoxicon | 250 | 22 abc | 96 bcd |
| 11 | *Composition 1 plus Wetspray 1000 | 63 Plus 200ml/100L | Epoxicon plus Nonionic surfactant | 31.5 | 22 abc | 91 abc |

| | | | | | | |
|---|---|---|---|---|---|---|
| Means with letter in common are not significantly different DAA = days after application [0090] *The only treatment which was significantly different 42 DAA was treatment 11 "Composition 1 plus Wetspray 1000". Differences were observed in the severity of Septoria. All treatments significantly lowered the severity of Septoria compared to the untreated control at 14 DAA. | | | | | | |

COMPOSITION 1 applied alone or with WETSPRAY provided equivalent or better control to OPUS in terms of severity of Septoria throughout the trial.

There were no statistical differences in green leaf retention, crop vigour, yield or grain quality observed in this trial.

No symptoms of phytotoxicity were observed throughout the trial.

### Example 4b: Bioefficacy (Barry trial)

### 4b: Summary

One small plot replicated field trial was conducted between November 2016 and January 2017 to evaluate COMPOSITION 1 for the control of stripe rust in wheat. The trial was conducted near Barry in the Central Tablelands region of New South Wales, Australia. The commercially available OPUS formulation (OPUS 125 provided by BASF) contained epoxiconazole active agent at 125 g/L.

**Table 15 - The following treatments were evaluated:**

| No. | Product/Formul ation | Rate of Product | Dosage A.I. | Application Timing |
|---|---|---|---|---|
| 1 | Untreated | - | - | - |
| 2 | OPUS | 250 mL/ha | 31.3 g/ha | A |
| 3 | OPUS | 500 mL/ha | 62.5 g/ha | A |
| | | | | |
| 8 | COMPOSITION 1 | 63 mL/ha | 31.5 g/ha | A |
| 9 | COMPOSITION 1 | 125 mL/ha | 62.5 g/ha | A |
| 10 | COMPOSITION 1 | 500 mL/ha | 250 g/ha | A |
| 11 | COMPOSITION 1 | 63 mL/ha | 31.5 g/ha | A |
| | WETSPRAY1000 | 200 mL/100 L | 200 g/100 L | A |

Treatments were applied using a motorised hand-held boom incorporating two Turbo Twinjet Flat Fan nozzles per metre. At an application speed of 2.0 m/s and a pressure of 200 kPa, treatments were applied in a total volume of 104 L/ha and a coarse quality. The treatments were applied once, at BBCH-14/16.

The trial was established as a randomised complete block design with four replicates. Plot size was 10 metres x 2.5 metres.

The target disease was stripe rust (*Puccinia striiformis*). The site was selected for an expected high disease pressure, and at the pre-spray assessment, 36% of Y-1, 68% of Y-2 and 28% of Y-3 tillers were affected.

Detailed assessments were conducted at pre-spray, 19 and 30 days after treatment (DAT) and at harvest. These included crop safety, disease incidence and severity, final crop yield and grain quality.

COMPOSITION 1 provided very high control of stripe rust in wheat at all application rates when applied with WETSPRAY 1000, or alone. WETSPRAY was a liquid alcohol alkoxylate surfactant provided at a concentration of 1000 g/L by ADAMA Australia.

COMPOSITION 1 provided equivalent control of stripe rust compared to OPUS 125.

No symptoms of crop phytotoxicity were observed as a result of the treatments applied in this trial and all treatments significantly improved the vigour of the crop at 19 DAT. An improvement in crop yield was observed where Composition 1 was applied alone, at all application rates.

4b:

**Table 16 - Site Details and Experimental Design**

| | |
|---|---|
| Location | Barry, New South Wales, Australia |
| Crop | Wheat |
| Variety | Wedgetail |
| Field Type | Commercial field |
| Soil Type | Red brown clay loam, pH 5.6 |
| Site History | Long-term fallow |
| Sowing Date | 19-August-2016 |
| Planting Details and Sowing Rate | Hege cone seeder with knife point tynes and press wheels, 80 kg seed/ha at a depth of 3 cm |
| Design | Randomised complete block |
| Replicates | Four |
| Plot Size | 10 m x 2.5 m |
| Buffers | 1 m each side |
| Irrigation Details | Dryland |
| Crop Management/Maintenance | Roundup CT, 2 L/ha pre-sowing DAP, 80 kg/ha banded at sowing |
| Seasonal Conditions | Average rainfall and temperatures were recorded during the trial period, with multiple high-rainfall events, which were conducive to the development of stripe rust. |
| Temperature and Rainfall | Full weather details in appendices, as recorded at Orange {Station 063303} approximately 33.0 km from the trial site. |

**4b:**

**Table 17 -Target pathogen**

| Common Name | Fungus | Disease Level | Disease Incidence at Application |
|---|---|---|---|
| Stripe rust | *Puccinia striiformis* f.sp. *tritici* | Moderate-high disease pressure throughout the trial | 0% on youngest leaf 36% on Y-1 |
| | | | 68% Y-2 |
| | | | 28 % Y-3 |

### 4b: Application Schedule (see summary section 4b above)

**4b:**

**Table 18 - Application timing and spray volume**

| Application Timing (Letter/Number) and Spray Volume | | | |
|---|---|---|---|
| A | BBCH-14/16 | Spray Volume | 104 L/ha |

**4b:**

**Table 19 - Sowing Method**

| | |
|---|---|
| Date | 16-Aug-2016 |
| Equipment | Hege cone seeder with knife point tynes and press wheels |
| Sowing Rate | 80 kg/ha |
| Row Spacing | 25 cm |
| Fertiliser Rate and Method | DAP, 80 kg/ha, banded at sowing |
| Pesticide Rate and Method | Roundup CT, 2 L/ha, broadcast pre-sowing |
| Soil Surface Condition at Planting | Direct drilled into fallow |
| Soil Moisture at Planting | Dry at surface, good moisture deeper in profile |
| Days to Germination | 10 days |
| Next Rainfall After Planting | 0.2 mm, 24 hours after planting |

**4b:**

**Table 20 - Treatment Method**

| Equipment | Motorised hand held boom |
|---|---|
| Method | Broadcast |
| Application Speed | 2.0 m/s |
| Nozzles | Turbo Twinjet 11002 flat fan |
| Nozzle Spacing | 50 cm |
| Pressure | 200 kPa |
| Application Volume | 104 L/ha |
| Spray Quality | Coarse |
| Boom Height From Target | 50 cm |
| Number of Applications, Interval Between Applications | One |
| Application Timing | BBCH-14/16 |
| Incorporation | Nil |

**4b:**

**Table 21 - Application Details**

| | |
|---|---|
| Date | 09-Nov-16 |
| Time of Day | 1400-1540 hours |
| Temperature | 18 °C |
| Relative Humidity | 55 % |
| Cloud Cover | 80 % |
| Wind (Speed and Direction) | 4 km/hr, W |
| Crop Growth Stage (BBCH and Description) | BBCH-14/16 (4-6 leaves unfolded) |
| Mixing Observations | Nil |
| Compatibility Observations | Nil |

**4b:**

**Table 22 - Evaluations**

| Date | Visit Timing | Activity Code | Application Timing (Stage / Description) | Evaluation Description * | Evaluation Timing (Stage / Description) |
|---|---|---|---|---|---|
| 08-Nov-16 | 1 | EV1 | | 1 | Pre-spray |
| 09-Nov-16 | 2 | A1 | BBCH - 14/16 | | |
| 28-Nov-16 | 3 | EV2 | | 1, 2, 3 | 19 DAT |
| 09-Dec-16 | 4 | EV3 | | 1 | 30 DAT |
| 24-Jan-16 | 5 | EV4 | | 4 | Harvest |

| | | | | | |
|---|---|---|---|---|---|
| * See Evaluation table below for description | | | | | |

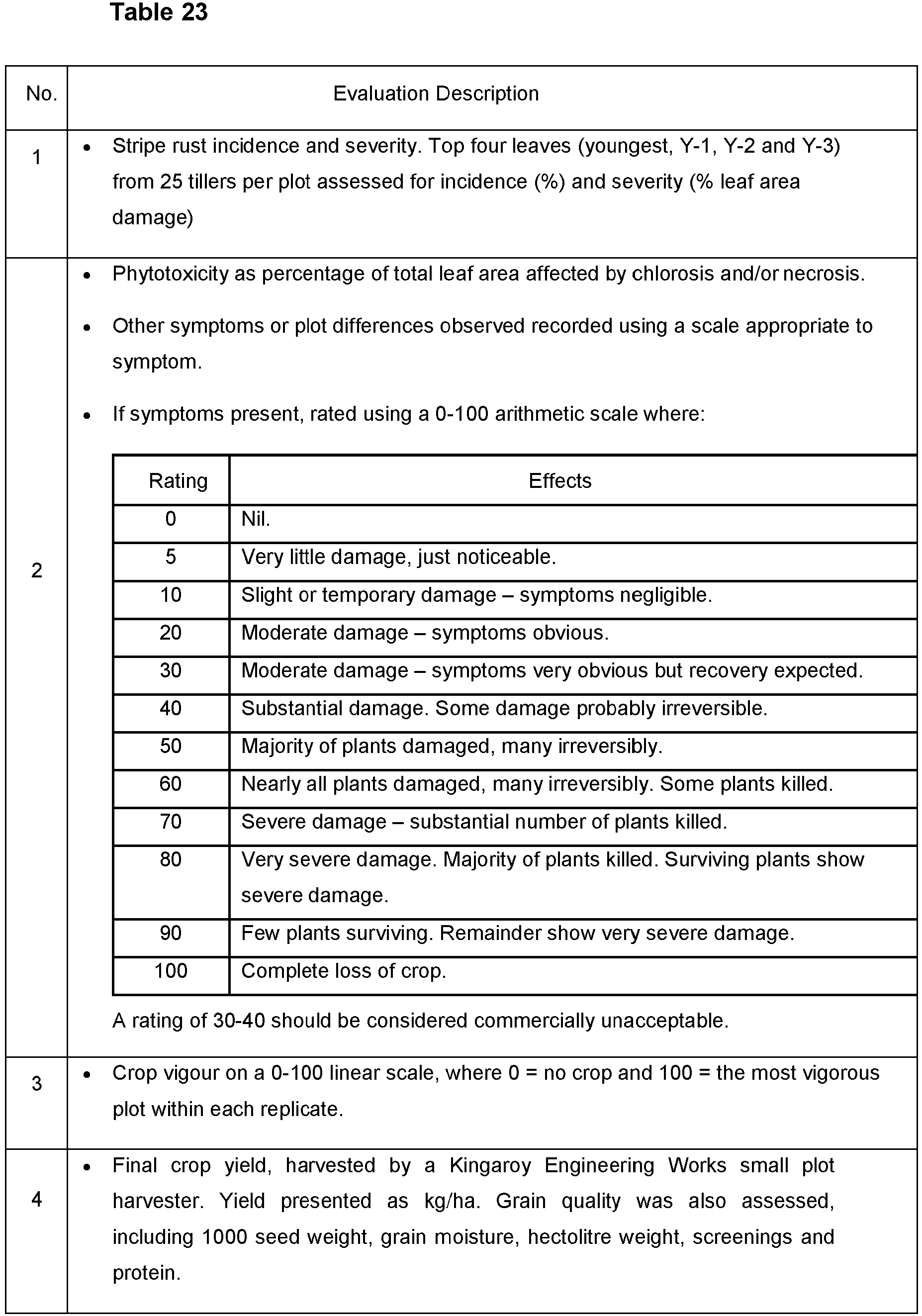

### 4b: RESULTS AND DISCUSSION - Epoxiconazole Trial Data 4b: Barry Trial

**Table 24 (i) Mean Severity (% lead area damage) of Septoria per treatment (ii)Mean crop yield**

| **no** | **treatment** | **Rate, ml/ha** | **ingredients** | **Dose, epoxicon per ha** | **30 DAA Youngest leaf % damage** | **Crop yield Kg/ha** |
|---|---|---|---|---|---|---|
| 1 | untreated | - | - | - | 2.1 b | 703 b |
| 2 | OPUS | 250 | epoxicon | 31.3 | 0.0 a | 797 a |
| 3 | OPUS | 500 | epoxicon | 62.5 | 0.0 a | 797 a |
| | | | | | | |
| 8 | Composition 1 | 63 | epoxicon | 31.5 | 0.0 a | 859 a |
| 9 | Composition 1 | 125 | epoxicon | 62.5 | 0.0 a | 836 a |
| 10 | Composition 1 | 500 | epoxicon | 250 | 0.0 a | 844 a |
| 11 | Composition 1 plus Wetspray 1000 | 63 Plus 200ml/100L | Epoxicon plus Nonionic surfactant | 31.5 | 0.0 a | 781 ab |

| | | | | | | |
|---|---|---|---|---|---|---|
| Means with letter in common are not significantly different DAA = days after application | | | | | | |

### 4b: Disease Control

All treatments significantly, and similarly, reduced the incidence and severity of stripe rust at 30 DAT during this trial.

### 4b: Crop Safety

No detrimental effects to the vigour or yield of the crop were observed as a result of the treatments applied. An improvement in crop yield was recorded where all treatments were applied.

### Example 5 (Comparative Example) Formulation of Epoxyconazole using the method of Australian Patent Application AU 201610158

Preparation of a suspensiuon concentrate composition of epoxiconazole was attempted using the general formulation of Australian patent application AU 201610158 relating to flutriafole as set out in Table 25.

**Table 25**

| component | description | Conc g/L | function |
|---|---|---|---|
| Epoxiconazole 98% | Triazole fungicide | 510 | Active ingredient |
| Tersperse 4894 | Surfactant package | 34.5 | dispersant |
| Atlox 4913 | Comb-graft 30% solution | 23 (7.1g solids) | dispersant |
| Tersperse 2700 | Sodium salt of acid resin copolymer | 6.9 | dispersant |
| glycerol | | 69 | Anti-freeze |
| Gensil | polydimethylsiloxane | 6.5 | antifoam |
| Veegum | Smectite clay | 4.0 | Flow modifier |
| Rhodopol 23 | Xanthan gum | 1.5 | Flow modifier |
| Acticide BW20 | benzisolthiazolinone | 1.4 | biocide |
| tartrazine | | 2.5 | Colouring agent |
| water | | 486.7 | |

**Preparation Method** - Standard practice for manufacture of a suspension concentrate involves charging all the active ingredient required for a batch of mill base all at once.

The standard method of preparing a batch of product is as follows: Surfactants, rheology modifier, antifoam, biocide and partial quantity of anti-freeze are dissolved/dispersed into water (typically 80% required). Active ingredient epoxiconazole is charged to vessel with agitation. This blend is milled to appropriate particle size by passing through the mill. The final step is the thickening step where a xanthan gum - antifreeze dispersion is blended into the milled base with top up of water.

The typical mill used for reduction of particle size is a bead mill e.g. Dyno-mill. The mixer used is a standard paddle type mixer.

### Results:

The sample prepared using the standard method of preparation was not of a milling consistency. The sample was a thick paste. Additional water was added (to 90% water required) and the product significantly reduced in viscosity.

However, the mill base quickly settles, and the rheology was dilatant (shear thickening) which is not a pumpable viscosity. The mill base should be of a pumpable viscosity and rheology to be introduced into the mill.

## Claims

1. An aqueous suspension-concentrate (SC) composition comprising:
at least 400g/L of epoxiconazole;
a comb-graft copolymer surfactant having a poly-(meth)acrylate backbone and pendant polyoxyethylene moieties attached to the backbone;
a surfactant which is an ethoxylated and propoxylated fatty alcohol; and
a surfactant which is an ethoxylated and propoxylated butanol.

2. The aqueous suspension-concentrate of claim 1, wherein the amount of epoxiconazole is at least 450 g/L of suspension-concentrate.

3. The aqueous suspension-concentrate of any one of the previous claims, wherein the comb-graft copolymer is present in the suspension-concentrate composition in an amount of 3 g/L to 40 g/L.

4. The aqueous suspension-concentrate of any one of the previous claims, wherein the ethoxylated and propoxylated fatty alcohol surfactant comprises a fatty alcohol of from 12 to 20 carbon atoms.

5. The aqueous suspension-concentrate of any one of the previous claims, wherein the amount of ethoxylated and propoxylated fatty alcohol is 1 g/L to 50 g/L, preferably 1g/L to 20 g/L.

6. The aqueous suspension-concentrate of any one of the previous claims, wherein the ethoxylated and propoxylated fatty alcohol has a ratio of EO to PO moieties in the range 10:50 to 50:10.

7. The aqueous suspension-concentrate of any one of the previous claims, wherein the ratio of comb-graft copolymer surfactant to ethoxylated and propoxylated fatty alcohol surfactant in the suspension-concentrate is in the range 30:1 to 0.8:1, preferably in the range 10:1 to 1:1.

8. The aqueous suspension-concentrate of any one of the previous claims comprising an ethoxylated and propoxylated butanol in an amount of 2 g/L to 80 g/L.

9. The aqueous suspension-concentrate of claim 8, wherein the ethoxylated and propoxylated butanol comprises a ratio of EO to PO moieties in the range 2:50 to 50:2, preferably in the range 20:50 to 50:20.

10. The aqueous suspension-concentrate of any one of the previous claims further comprising a surfactant having a fatty alkyl chain and polyethoxylate group selected from the group consisting of fatty alcohol ethoxylates, fatty acid ethoxylates, fatty amine ethoxylates and fatty amide ethoxylates.

11. The aqueous suspension-concentrate of claim 10, wherein the surfactant having a fatty alkyl chain and polyethoxylate group is present in an amount of 2 g/L to 100 g/L of suspension-concentrate composition.

12. The aqueous suspension-concentrate of claim 10 or claim 11, wherein the surfactant having a fatty alkyl chain and ethoxylate group has a number of (ethyleneoxy) EO groups (OC₂H₄) in the surfactant in the range 1-50.

13. The aqueous suspension-concentrate of claim 12, wherein the number of EO groups in the surfactant is in the range of 6 to 20.

14. The aqueous suspension-concentrate of any one of the previous claims comprising:
at least 400g/L of epoxiconazole;
5 g/L to 40 g/L comb-graft copolymer having a poly-(meth)acrylate backbone and pendant polyoxyethylene moieties attached to the backbone;
1 g/L to 50 g/L of a surfactant which is an ethoxylated and propoxylated fatty alcohol;
2 g/L to 80 g/L ethoxylated and propoxylated butanol; and
2 g/L to 100 g/L of surfactant having a fatty alkyl chain and polyethoxylate group selected from the group consisting of fatty alcohol ethoxylates, fatty acid ethoxylates, fatty amine ethoxylates, and fatty amide alkoxylates.

15. A method of protecting plants or the site of plants from fungi comprising spray application of the suspension-concentrate composition of any one of the previous claims to the plants or the site of plants optionally following dilution of the suspension-concentrate.

## Patentansprüche

1. Wässrige Suspensionskonzentrat (SC)-Zusammensetzung, umfassend:
mindestens 400 g/L Epoxiconazol;
ein Kamm-Pfropf-Copolymer-Tensid mit einem Poly(meth)acrylat-Rückgrat und an das Rückgrat gebundenen Polyoxyethylen-Resten;
ein Tensid, das ein ethoxylierter und propoxylierter Fettalkohol ist; und
ein Tensid, das ein ethoxyliertes und propoxyliertes Butanol ist.

2. Wässriges Suspensionskonzentrat nach Anspruch 1, wobei die Menge an Epoxiconazol mindestens 450 g/L des Suspensionskonzentrats beträgt.

3. Wässriges Suspensionskonzentrat nach einem jeglichen der vorhergehenden Ansprüche, wobei das Kamm-Pfropf-Copolymer in der Suspensionskonzentrat-Zusammensetzung in einer Menge von 3 g/L bis 40 g/L vorhanden ist.

4. Wässriges Suspensionskonzentrat nach einem jeglichen der vorhergehenden Ansprüche, wobei das ethoxylierte und propoxylierte Fettalkohol-Tensid einen Fettalkohol mit 12 bis 20 Kohlenstoffatomen umfasst.

5. Wässriges Suspensionskonzentrat nach einem jeglichen der vorhergehenden Ansprüche, wobei die Menge an ethoxyliertem und propoxyliertem Fettalkohol 1 g/L bis 50 g/L, vorzugsweise 1 g/L bis 20 g/L beträgt.

6. Wässriges Suspensionskonzentrat nach einem jeglichen der vorhergehenden Ansprüche, wobei der ethoxylierte und propoxylierte Fettalkohol ein Verhältnis von EOzu PO-Resten in dem Bereich von 10:50 bis 50:10 aufweist.

7. Wässriges Suspensionskonzentrat nach einem jeglichen der vorhergehenden Ansprüche, wobei das Verhältnis von Kamm-Pfropf-Copolymer-Tensid zu ethoxyliertem und propoxyliertem Fettalkohol-Tensid in dem Suspensionskonzentrat in dem Bereich von 30:1 bis 0,8:1, vorzugsweise in dem Bereich von 10:1 bis 1:1 liegt.

8. Wässriges Suspensionskonzentrat nach einem jeglichen der vorhergehenden Ansprüche, das ein ethoxyliertes und propoxyliertes Butanol in einer Menge von 2 g/L bis 80 g/L umfasst.

9. Wässriges Suspensionskonzentrat nach Anspruch 8, wobei das ethoxylierte und propoxylierte Butanol ein Verhältnis von EO- zu PO-Resten in dem Bereich von 2:50 bis 50:2, vorzugsweise in dem Bereich von 20:50 bis 50:20, umfasst.

10. Wässriges Suspensionskonzentrat nach einem jeglichen der vorhergehenden Ansprüche, das ferner ein Tensid mit einer Fettalkylkette und Polyethoxylatgruppe, ausgewählt aus der Gruppe, bestehend aus Fettalkohol-Ethoxylaten, Fettsäure-Ethoxylaten, Fettamin-Ethoxylaten und Fettamid-Ethoxylaten, umfasst.

11. Wässriges Suspensionskonzentrat nach Anspruch 10, wobei das Tensid mit einer Fettalkylkette und Polyethoxylatgruppe in einer Menge von 2 g/L bis 100 g/L der Suspensionskonzentrat-Zusammensetzung vorhanden ist.

12. Wässriges Suspensionskonzentrat nach Anspruch 10 oder 11, wobei das Tensid mit einer Fettalkylkette und Ethoxylatgruppe eine Anzahl von (Ethylenoxy) EO-Gruppen (OC₂H₄) in dem Tensid in dem Bereich von 1-50 aufweist.

13. Wässriges Suspensionskonzentrat nach Anspruch 12, wobei die Anzahl der EO-Gruppen in dem Tensid in dem Bereich von 6 bis 20 liegt.

14. Wässriges Suspensionskonzentrat nach einem jeglichen der vorhergehenden Ansprüche, umfassend:
mindestens 400 g/L Epoxiconazol;
5 g/L bis 40 g/L Kamm-Pfropf-Copolymer mit einem Poly(meth)acrylat-Rückgrat und an das Rückgrat gebundenen Polyoxyethylen-Resten;
1 g/L bis 50 g/L eines Tensids, das ein ethoxylierter und propoxylierter Fettalkohol ist;
2 g/L bis 80 g/L ethoxyliertes und propoxyliertes Butanol; und
2 g/L bis 100 g/L eines Tensids mit einer Fettalkylkette und Polyethoxylatgruppe, ausgewählt aus der Gruppe, bestehend aus Fettalkohol-Ethoxylaten, Fettsäure-Ethoxylaten, Fettamin-Ethoxylaten und Fettamid-Alkoxylaten.

15. Verfahren zum Schutz von Pflanzen oder des Standortes von Pflanzen vor Pilzen, umfassend eine Sprühanwendung der Suspensionskonzentrat-Zusammensetzung nach einem jeglichen der vorhergehenden Ansprüche auf die Pflanzen oder den Standort von Pflanzen, optional nach Verdünnung des Suspensionskonzentrats.

## Revendications

1. Composition suspension aqueuse-concentrée (SC) comprenant :
au moins 400 g/l d'époxiconazole ;
un tensioactif de copolymère greffé en peigne possédant un squelette de poly(méth)acrylate et des fragments de polyoxyéthylène pendants fixés au squelette ;
un tensioactif qui est un alcool gras éthoxylé et propoxylé ; et
un tensioactif qui est un butanol éthoxylé et propoxylé.

2. Suspension aqueuse-concentré selon la revendication 1, ladite quantité d'époxiconazole étant d'au moins 450 g/l de suspension-concentré.

3. Suspension aqueuse-concentré selon l'une quelconque des revendications précédentes, ledit copolymère greffé en peigne étant présent dans la composition suspension-concentré en une quantité de 3 g/l à 40 g/l.

4. Suspension aqueuse-concentré selon l'une quelconque des revendications précédentes, ledit tensioactif d'alcool gras éthoxylé et propoxylé comprenant un alcool gras de 12 à 20 atomes de carbone.

5. Suspension aqueuse-concentré selon l'une quelconque des revendications précédentes, ladite quantité d'alcool gras éthoxylé et propoxylé étant de 1 g/l à 50 g/l, de préférence de 1 g/l à 20 g/l.

6. Suspension aqueuse-concentré selon l'une quelconque des revendications précédentes, ledit alcool gras éthoxylé et propoxylé présentant un rapport des fractions EO aux fractions PO compris dans la plage de 10:50 à 50:10.

7. Suspension aqueuse-concentré selon l'une quelconque des revendications précédentes, ledit rapport du tensioactif de copolymère greffé en peigne au tensioactif d'alcool gras éthoxylé et propoxylé dans la suspension-concentré étant compris dans la plage de 30:1 à 0,8:1, de préférence dans la plage de 10:1 et 1:1.

8. Suspension aqueuse-concentré selon l'une quelconque des revendications précédentes comprenant un butanol éthoxylé et propoxylé en une quantité de 2 g/1 à 80 g/l.

9. Suspension aqueuse-concentré selon la revendication 8, ledit butanol éthoxylé et propoxylé comprenant un rapport des fractions EO aux fractions PO compris dans la plage de 2:50 à 50:2, de préférence dans la plage de 20:50 à 50:20.

10. Suspension aqueuse-concentré selon l'une quelconque des revendications précédentes comprenant en outre un tensioactif comportant une chaîne alkyle grasse et un groupe polyéthoxylate choisi dans le groupe constitué par les éthoxylates d'alcool gras, les éthoxylates d'acide gras, les éthoxylates d'amine grasse et les éthoxylates d'amide gras.

11. Suspension aqueuse-concentré selon la revendication 10, ledit tensioactif comportant une chaîne alkyle grasse et un groupe polyéthoxylate étant présent en une quantité de 2 g/l à 100 g/l de composition suspension-concentré.

12. Suspension aqueuse-concentré selon la revendication 10 ou la revendication 11, ledit tensioactif comportant une chaîne alkyle grasse et un groupe éthoxylate comportant un nombre de groupes EO (éthylèneoxy) (OC₂H₄) dans le tensioactif dans la plage de 1 à 50.

13. Suspension aqueuse-concentré selon la revendication 12, ledit nombre de groupes EO dans le tensioactif étant compris dans la plage de 6 à 20.

14. Suspension aqueuse-concentré selon l'une quelconque des revendications précédentes comprenant :
au moins 400 g/l d'époxiconazole ;
5 g/l à 40 g/l d'un tensioactif de copolymère greffé en peigne possédant un squelette de poly(méth)acrylate et des fragments de polyoxyéthylène pendants fixés au squelette ;
1 g/l à 50 g/l d'un tensioactif qui est un alcool gras éthoxylé et propoxylé ;
2 g/l à 80 g/l de butanol éthoxylé et propoxylé ; et
2 g/l à 100 g/l d'un tensioactif comportant une chaîne alkyle grasse et un groupe polyéthoxylate choisi dans le groupe constitué par les éthoxylates d'alcool gras, les éthoxylates d'acide gras, les éthoxylates d'amine grasse et les alcoxylates d'amide gras.

15. Procédé de protection des plantes ou du site des plantes contre les champignons comprenant l'application par pulvérisation de la composition suspension-concentré selon l'une quelconque des revendications précédentes sur les plantes ou le site des plantes éventuellement après dilution de la suspension-concentré.
